# EUROPÄISCHE PATENTANMELDUNG

(11) **EP 4 659 899 A1**
(43) Veröffentlichungstag der Anmeldung: **10.12.2025**
(21) Anmeldenummer: 25180910.9
(22) Anmeldetag: 04.06.2025
(51) Int. Cl.: B24B 27/08

(54) **ELEKTRISCHER TRENNSCHLEIFER MIT EINEM AKKU UND MEHREREN BETRIEBSMODI**

(30) Priorität: 05.06.2024 DE 102024115665
(71) Anmelder: Andreas Stihl AG & Co. KG, 71336 Waiblingen (DE)
(72) Erfinder: HAAS, Alexander, 73565 Spraitbach (DE); RENZ, Johann-Sebastian, 72810 Gomaringen (DE); EHRLER, Denis, 73249 Wernau (DE); WAGNER, Tobias, 73663 Berglen (DE); SCHINDLER, Patrick, 73235 Weilheim an der Teck (DE); OTTERBACH, Horst, 71336 Waiblingen (DE)
(74) Vertreter: Karzel, Philipp

(57) **Zusammenfassung**

Die Erfindung betrifft einen Trennschleifer (1) mit einem elektrischen Antriebsmotor (AM) zum Antrieb eines Trennwerkzeugs (3). Im Trennschleifer (1) ist eine Steuereinheit (10) vorgesehen, die dem Antriebsmotor (AM) über ein Schaltelement (11) elektrische Leistung (P) zuführt. Die Steuereinheit (10) ist mit einem Stellglied (12) verbunden ist und ändert die Drehzahl (n) des Antriebsmotors (AM) mit der Größe und/oder Form des Stellsignals (13). Nach der Erfindung verfügt die Steuereinheit (10) über einen ersten und einen zweiten Betriebsmodus (M1, M2). Im ersten Betriebsmodus (M1) wird in Abhängigkeit des Stellsignals (13) die Drehzahl (n) des Antriebsmotors (AM) nach einer ersten Betriebskurve (K1) mit einer ersten maximalen Leistung (P1) und einer ersten Enddrehzahl (n1) zugeführt. In einem zweiten Betriebsmodus (M2) wird in Abhängigkeit der Größe des Stellsignals (13) die Drehzahl (n) des Antriebsmotors (AM) nach einer zweiten Betriebskurve (K2) mit einer zweiten maximalen Leistung (P2) und einer zweiten Enddrehzahl (n2) zugeführt.

## Beschreibung

Die Erfindung betrifft einen Trennschleifer mit einem elektrischen Antriebsmotor zum Antrieb eines Trennwerkzeugs um eine Drehachse. Es ist eine Steuereinheit vorgesehen, die dem elektrischen Antriebsmotor über zumindest ein Schaltelement eine elektrische Leistung für eine Drehzahl zuführt. Die Steuereinheit ist mit einem manuell verstellbaren Stellglied verbunden, welches ausgebildet ist, der Steuereinheit ein in seiner Größe veränderbares Stellsignal zuzuführen. Das Stellglied ist mit einem Stellweg ausgebildet, der sich zwischen einer ersten Lage des Stellgliedes und einer zweiten Lage des Stellgliedes erstreckt. In der ersten Lage des Stellgliedes ist das Stellsignal insbesondere "0", in einer zweiten Lage des Stellgliedes ist das Stellsignal beispielsweise auf 100% angewachsen. In Abhängigkeit zumindest eines zurückgelegten Abschnittes des Stellweges ändert sich die Größe des Stellsignal, wobei zumindest die Drehzahl des Antriebsmotors mit zunehmender Größe des Stellsignals größer wird.

Bei einem elektrischen Trennschleifer ist das Stellglied von einem Betätigungselement (Gashebel) zu bedienen, der in einem insbesondere hinteren Handgriff des Trennschleifers angeordnet ist. Regelmäßig wird ein Benutzer das Betätigungselement (Gashebel) vollständig durchdrücken, um den Trennschleifer mit maximaler Leistung und/oder maximaler Drehzahl zu nutzen.

Soll mit dem elektrischen Trennschleifer ein präziser Schnitt ausgeführt werden und/oder ein schönes Schnittbild erreicht werden, ist dies mit maximaler Drehzahl oft nicht oder nur sehr schwer zu erreichen. Sollen zum Beispiel lackierte Kacheln zurechtgeschnitten werden, bei denen das Grundmaterial z. B. grau und die Lackierung weiß ist, so sollen nach dem Schnitt auf der lackierten Oberfläche möglichst wenig Ausbrüche zu sehen sein, die in der Farbe des Grundmaterials, z. B. grau, hervortreten würden. Aber auch gerade Schnitte oder Kurvenschnitte mit einem schönen Schnittbild sind bei hohen Drehzahlen und/oder maximaler Leistung kaum zu erreichen, da auftretende Kreiselkräfte und Vibrationen eine präzise Führung des Trennschleifers behindern.

Der Benutzer wird zur Erzielung eines sauberen Schnittbildes oder eines präzisen Schnittes versuchen, die Drehzahl mit dem Betätigungselement (Gashebel) anzupassen. Um eine niedrige Betriebsdrehzahl einzustellen, darf das Betätigungselement nicht vollständig gedrückt werden. Ein Arbeiten mit dem Trennschleifer bei nur teilweise durchgedrücktem Betätigungselement (Gashebel) ist ermüdend und führt nicht immer zu dem gewünschten Ergebnis. Insbesondere können leichte Stellungsänderungen des Stellgliedes bereits zu erheblichen Drehzahländerungen führen, was mit Vibrationen und erhöhten Kreiselkräften einhergeht.

Der Erfindung liegt die Aufgabe zugrunde, einen aus einem Akku gespeisten elektrischen Trennschleifer derart auszubilden, dass der Benutzer präzise Schnitte mit einem sauberen Schnittbild ausführen kann.

Die Aufgabe wird nach den Merkmalen des Anspruchs 1 gelöst, wonach die Steuereinheit ausgebildet ist, in einem ersten und zumindest einem zweiten Betriebsmodus betrieben zu werden. Die Steuereinheit ist ausgebildet, im ersten Betriebsmodus in Abhängigkeit der Größe des Stellsignals des Stellgliedes die Drehzahl des Antriebsmotors nach einer ersten Betriebskurve mit einer ersten maximalen Leistung und einer ersten Enddrehzahl zu steuern. Die Steuereinheit ist ferner ausgebildet, im zweiten Betriebsmodus in Abhängigkeit der Größe des Stellsignals die Drehzahl des Antriebsmotors nach einer zweiten Betriebskurve mit einer zweiten maximalen Leistung und einer zweiten Enddrehzahl zu steuern.

Durch diese Ausbildung des Trennschleifer mit einer Steuereinheit und zumindest zwei Betriebsmodi ist dem Benutzer die Möglichkeit gegeben, den für einen Schnitt geeigneten Betriebsmodus zu wählen. Wird vom Benutzer über eine Eingabeeinheit z. B. der erste Betriebsmodus mit einer niedrigen Drehzahl und einer niedrigen Leistung gewählt, so kann auch bei vollständig durchgedrücktem Betätigungsglied (Gashebel) ein sauberer und präziser Schnitt ausgeführt werden. Die Betriebskurve ist der Steuereinheit vorgegeben und begrenzt die Drehzahl auf eine erste Enddrehzahl und/oder eine erste Leistung. Am Gehäuse des Trennschleifers ist zweckmäßig die Eingabeeinheit vorgesehen, über die der Benutzer den gewünschten Betriebsmodus wählen kann, den er zur Ausführung eines Schnittes benötigt. Die Eingabeeinheit kann auch eine drahtlose Eingabeeinheit sein.

Die erste und die zweite Betriebskurve sind durch vorgegebene Kennwerte wie z. B. Steigung, Maximalwerte, Minimalwerte und/oder Kurvenpunkte bestimmt. Die Kennwerte der Betriebskurven sind vorzugsweise abgespeichert. Insbesondere ist hierfür ein Betriebskurvenspeicher vorgesehen, der mit der Steuereinheit verbunden ist. Im Betriebskurvenspeicher können die Betriebskurven mit diskreten Betriebspunkten oder Algorithmen hinterlegt werden.

Die erste und die zweite Betriebskurve weisen jeweils ein Leistungsplateau auf. Das jeweilige Leistungsplateau hat eine vorgegebene, insbesondere gleichbleibende Leistung. Die Leistung des Leistungsplateaus der ersten Betriebskurve ist kleiner als die Leistung des Leistungsplateaus der zweiten Betriebskurve. Die Leistung des ersten Leistungsplateaus kann zwischen 2.000 Watt und 3.000 Watt liegen. Die Leistung des zweiten Leistungsplateaus kann zwischen 2.600 Watt und 3.800 Watt liegen. Die Leistung eines dritten Leistungsplateaus einer insbesondere dritten Betriebskurve kann zwischen 3.600 Watt und 5.000 Watt liegen und kann der Maximalleistung der Antriebseinheit entsprechen.

Die über der Drehzahl ansteigenden Kurvenabschnitte zum Leistungsplateau der ersten Betriebskurve des ersten Betriebsmodus und zum Leistungsplateau der zweiten Betriebskurve des zweiten Betriebsmodus haben unterschiedliche Steigungen. Dabei ist die Steigung des Kurvenabschnittes zum Leistungsplateau der ersten Betriebskurve kleiner als die Steigung des Kurvenabschnittes zum Leistungsplateau der zweiten Betriebskurve. Dies bedeutet auch, dass mit zunehmendem Stellweg des Stellgliedes die Drehzahl der ersten Betriebskurve langsamer ansteigt als die Drehzahl der zweiten Betriebskurve. Die Betriebskurven sind derart ausgelegt, dass die erste Enddrehzahl der ersten Betriebskurve kleiner ist als die zweite Enddrehzahl der zweiten Betriebskurve. Alternativ oder zusätzlich ist die erste maximale Leistung der ersten Betriebskurve kleiner als die zweite maximale Leistung der zweiten Betriebskurve. Dadurch ist insbesondere ermöglicht, dass wenn vom Benutzer über eine Eingabeeinheit der erste Betriebsmodus mit kleiner erster Enddrehzahl und einer kleinen ersten maximalen Leistung gewählt wird, auch bei einem vollständig durchgedrückten Betätigungsglied zur Beeinflussung der Drehzahl und/oder der Leistung ein sauberer und präziser Schnitt ausgeführt werden kann.

Es kann vorteilhaft sein, einen dritten Betriebsmodus mit einer dritten Betriebskurve vorzusehen. Auch die dritte Betriebskurve des dritten Betriebsmodus ist in einem mit der Steuereinheit verbundenen Betriebskurvenspeicher hinterlegt. Insbesondere hat die dritte Betriebskurve eine maximale Steigung und eine maximale (dritte) Enddrehzahl.

In Weiterbildung der Erfindung ist vorgesehen, dass manuelle Stellglied als Potentiometer auszubilden, insbesondere als digitales Potentiometer auszubilden. Auch andere Bauarten von Stellgliedern können zweckmäßig sein.

Der elektrische Trennschleifer ist aus einem Akku gespeist, der die zum Betrieb des Antriebsmotors notwendige elektrische Leistung zur Verfügung stellt. In Weiterbildung der Erfindung ist vorgesehen, die Steuereinheit derart auszubilden, dass sie die Leistung und/oder die Kapazität des im Trennschleifer eingesteckten Akkus erfassen kann. Die erkannte Leistung und/oder Kapazität des Akkus kann genutzt werden, die Auswahl des Betriebsmodus in Abhängigkeit der Größe der Kapazität und/oder der Leistung des eingesteckten Akkus einzuschränken. So kann z.B. die dritte Betriebskurve mit maximaler Leistung gesperrt und nicht anwählbar sein, wenn ein Akku mit zu geringer Kapazität eingesteckt ist.

Der Stellweg des Stellgliedes weist einen ersten Stellabschnitt und zumindest einen zweiten Stellabschnitt auf. Die Drehzahl des Antriebsmotors nimmt im ersten Stellabschnitt des Stellgliedes auf die Enddrehzahl des Betriebsmodus zu. Die Ausbildung der Betriebsmodi ist derart vorgesehen, dass der erste Stellabschnitt der ersten Betriebskurve im ersten Betriebsmodus länger ist als der erste Stellabschnitt der zweiten Betriebskurve im zweiten Betriebsmodus.

Es kann vorteilhaft sein, dass der erste Stellabschnitt im ersten Betriebsmodus 70% bis 80% des gesamten Stellweges des Stellgliedes entspricht. Der erste Stellabschnitt im zweiten Betriebsmodus entspricht vorteilhaft 50% bis 70% des gesamten Stellweges des Stellgliedes. In einem dritten Betriebsmodus entspricht der erste Stellabschnitt etwa 25% bis 35% des gesamten Stellweges.

Weitere Merkmale der Erfindung sind in den Ansprüchen, der folgenden Beschreibung und der Zeichnung offenbart. Die in den Ansprüchen, der folgenden Beschreibung und der Zeichnung offenbarten Merkmale können untereinander beliebig kombiniert werden.

Ein Ausführungsbeispiel der Erfindung ist in den Zeichnungen dargestellt und wird nachfolgend im Einzelnen beschrieben. Es zeigen:
- Fig. 1: in Seitenansicht einen mit einem akkubetriebenen elektrischen Trennschleifer,
- Fig. 2: eine schematische Darstellung der im Trennschleifer verbauten Steuereinheit zum Betrieb in unterschiedlichen Betriebsmodi,
- Fig. 3: ein Diagramm der Leistung über der Drehzahl unterschiedlicher Betriebskurve der verschiedenen Betriebsmodi,
- Fig. 4: ein Diagramm der Drehzahl über dem Stellweg des Stellgliedes in unterschiedlichen Betriebsmodi.

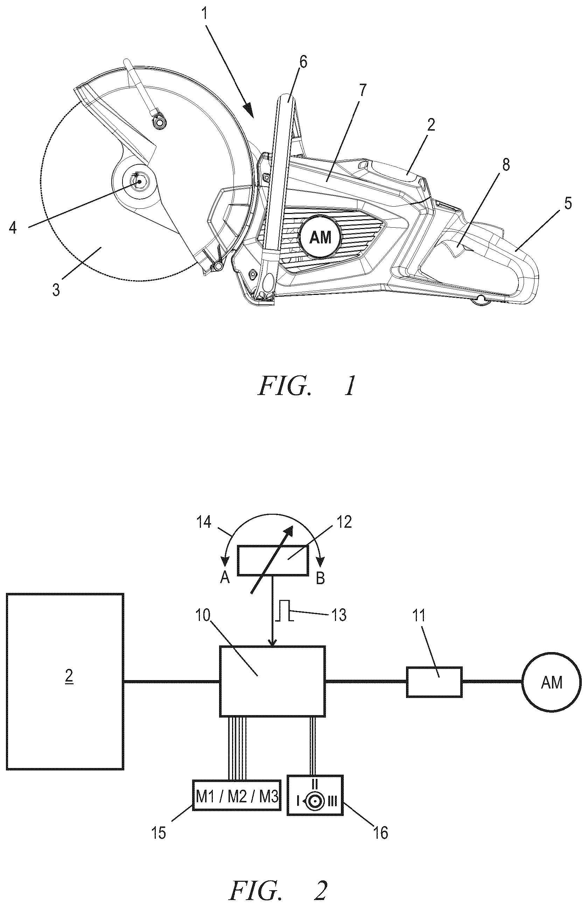

In Fig. 1 ist ein elektrischer Trennschleifer 1 gezeigt, der elektrisch aus einem Akku 2 gespeist ist. Der Akku 2 ist über einen Großteil seiner Länge in das Gehäuse7 des Trennschleifers 1 eingeschoben. Der elektrische Antriebsmotor AM des Trennschleifers 1 treibt ein Trennwerkzeug 3 um eine Drehachse 4 rotierend an. Der Trennschleifer 1 wird von einem Benutzer mit einem hinteren Handgriff 5 und einem vorderen Bügelgriff 6 geführt und gehalten. Insbesondere im hinteren Handgriff 5 ist ein Betätigungsglied 8 (Gashebel) gehalten. Das Betätigungsglied 8 ist mechanisch mit einem elektrischen Stellglied 12 (Fig. 2) gekoppelt. Ein Verschwenken (Niederdrücken) des Betätigungsgliedes 8 (Gashebel) bewirkt eine Verstellung des Stellgliedes 12, welches in Abhängigkeit eines ausgeführten Stellweges die Größe und oder Form eines Stellsignals 13 ändert.

Im Gehäuse 7 des Trennschleifers ist eine Steuereinheit 10 aufgenommen, die in Fig. 2 in einem schematischen Blockschaltbild wiedergegeben ist. Die Steuereinheit 10 ist ausgebildet, über zumindest ein Schaltelement 11 dem Antriebsmotor AM die zum Betrieb notwendige Leistung aus dem Akku 2 zuzuführen. Hierzu ist die Steuereinheit 10 einerseits mit dem Akku 2 und andererseits mit dem Schaltelement 11 verbunden, welches mit dem Antriebsmotor AM in Verbindung steht. Das Schaltelement 11 kann ein elektromechanisches Schaltelement sein; insbesondere ist das Schaltelement 11 ein elektronisches Schaltelement, so z. B. ein Leistungstransistor, ein Thyristor ein MOSFET oder dgl.

Die Steuereinheit 10 ist mit dem vom Betätigungsglied 8 manuell verstellbaren Stellglied 12 verbunden. Das Stellglied 12 ist ausgebildet, der Steuereinheit 10 ein in seiner Größe und/oder Form veränderbares Stellsignal 13 zuzuführen. Die dem Antriebsmotor AM über das Schaltelement 11 zugeführte elektrische Leistung P bzw. die Drehzahl n des Antriebsmotors AM ist abhängig von der Größe und/oder Form des Stellsignals 13. Bevorzugt steigt die Drehzahl n des Antriebsmotors AM bzw. wächst die dem Antriebsmotor AM zugeführte elektrische Leistung P mit zunehmender Größe des Stellsignals 13 an.

Das manuelle Stellglied 12 ist mit einem Stellweg 14 ausgebildet, der sich zwischen einer ersten Lage A des Stellgliedes 12 und einer zweiten Lage B des Stellgliedes 12 erstreckt. Die Lage A des Stellgliedes 12 entspricht z. B. einer Nulllage mit einer Größe des Stellsignals 13 von "0"; die Lage B des Stellgliedes 12 entspricht z. B. einer Endlage mit einer Größe des Stellsignals 13 von z. B. 100%. Die Größe des Stellsignals 13 nimmt in Abhängigkeit zumindest eines zurückgelegten Abschnittes des Stellweges 14 von der ersten Lage A zur zweiten Lage B zu. In Gegenrichtung nimmt die Größe des Stellsignals 13 in Abhängigkeit zumindest eines zurückgelegten Abschnittes des Stellweges 14 von der zweiten Lage B zur ersten Lage A ab. Mit dem Stellglied 12 kann die Drehzahl des Antriebsmotors AM verändert werden.

Die Steuereinheit 10 ist derart ausgebildet, dass sie über einen ersten Betriebsmodus M1 und zumindest einen weiteren, zweiten Betriebsmodus M2 verfügt. Vorteilhaft ist die Steuereinheit 10 derart ausgebildet, dass auch ein dritter Betriebsmodus M3 zum Betrieb des Trennschleifers 1 zur Verfügung steht.

Zumindest die erste und die zweite Betriebskurve sind durch vorgegebene Kennwerte bestimmt. Diese Kennwerte können einzelne Betriebspunkte sein oder auch durch eine Funktionsgleichung festgelegt sein. Diese Kennwerte, insbesondere eine konkrete Betriebskurve sind in einem Betriebskurvenspeicher 15 abgespeichert. Der Betriebskurvenspeicher 15 ist mit der Steuereinheit 10 elektrisch verbunden. Die Steuereinheit 10 kann die unterschiedlichen Betriebskurve der Betriebsmodi M1, M2 und/oder M3 aus dem Betriebskurvenspeicher 15 abrufen. Die Wahl des entsprechenden Betriebsmodus M1, M2 oder M3 erfolgt durch eine Eingabeeinheit 16, die in Fig. 2 schematisch als Drehwähler dargestellt ist. Die Eingabevorrichtung kann auch als Touchdisplay, durch einzelne Schalter oder dergleichen ausgebildet sein.

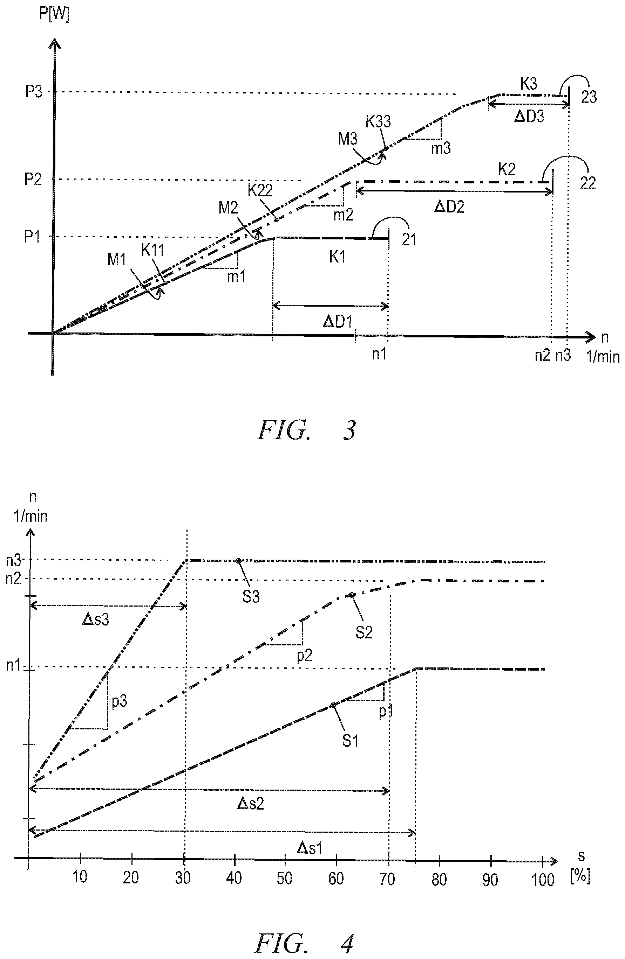

In Fig. 3 sind unterschiedliche Betriebskurven K1, K2 und K3 verschiedener Betriebsmodi M1, M2 und M3 wiedergegeben. Die Betriebskurven K1, K2 und K3 sind als Kurven der Leistung P in Watt über der Drehzahl n in 1/min dargestellt.

Eine erste Betriebskurve K1 des ersten Betriebsmodus M1 weist eine erste maximale Leistung P1 und eine erste Enddrehzahl n1 auf. Die maximale Leistung P1 liegt über ein Drehzahlfenster ΔD1 auf einem insbesondere in der Leistung P gleichbleibenden Leistungsplateau 21 an. Insbesondere beträgt die erste maximale Leistung P1 2.400 Watt. Insbesondere beträgt die erste Enddrehzahl n1 8.000 1/min.

Eine zweite Betriebskurve K2 des zweiten Betriebsmodus M2 weist eine zweite maximale Leistung P2 und eine zweite Enddrehzahl n2 auf. Die maximale Leistung P2 liegt über ein Drehzahlfenster ΔD2 auf einem insbesondere in der Leistung P gleichbleibenden Leistungsplateau 22 an. Insbesondere beträgt die maximale Leistung P2 3.800 Watt. Insbesondere beträgt die zweite Enddrehzahl n2 9.700 1/min.

Eine dritte Betriebskurve K3 des dritten Betriebsmodus M3 weist eine dritte maximale Leistung P3 und eine dritte Enddrehzahl n3 auf. Die maximale Leistung P3 liegt über ein Drehzahlfenster ΔD3 auf einem insbesondere in der Leistung P gleichbleibenden Leistungsplateau 23 an. Insbesondere beträgt die maximale Leistung P3 5.000 Watt. Insbesondere beträgt die dritte Enddrehzahl n2 10.000 1/min

Ausgehend von einer Startdrehzahl, insbesondere einer Startdrehzahl "Null", wird das jeweilige Leistungsplateau 21, 22, 23 über jeweils einen ansteigenden Kurvenabschnitt K11, K22, K33 erreicht. Dabei haben die ansteigenden Kurvenabschnitte K11, K22, K33 jeweils unterschiedliche Steigungen m1, m2 und m3.

Der ansteigende Kurvenabschnitt K11 zum ersten Leistungsplateau 21 der ersten Betriebskurve K1 hat die Steigung m1. Der ansteigende Kurvenabschnitt K22 zum zweiten Leistungsplateau 22 der zweiten Betriebskurve K2 hat die Steigung m2. Der ansteigende Kurvenabschnitt K33 zum dritten Leistungsplateau 23 der dritten Betriebskurve K3 hat die Steigung m3.

Wie Fig. 3 zu entnehmen, ist die Steigung m1 des ansteigenden Kurvenabschnitts K11 kleiner als die Steigung m2 und/oder m3 der ansteigenden Kurvenabschnitte K22 und K33 der zweiten und/oder der dritten Betriebskurve K2 und K3. Die Steigung m3 des ansteigenden Kurvenabschnitts K33 hat die größte Steigung. Die Steigung m2 liegt zwischen der geringsten Steigung m1 und der größten Steigung m3. Es gilt die Gleichung: m1 < m2 < m3.

In besonderer Weiterbildung der Erfindung ist vorgesehen, jeder Betriebskurve K1, K2 und/oder K3 eine veränderte Charakteristik des Stellsignals 13 zuzuordnen. In Fig. 4 sind verschiedene Stellkurven S1, S2 und S3 als Drehzahl n [1/min] über den Stellweg s [%] dargestellt. Die Enddrehzahl n1 der ersten Betriebskurve K1 wird erst dann erreicht, wenn das Stellglied 12 insbesondere 70% bis 80%, ganz insbesondere 75% des Stellweges 14 zurückgelegt hat. Erst auf den letzten 20% bis 30% des Stellweges 14, insbesondere 25% des Stellweges 14, ist die Drehzahl mit n1 als Enddrehzahl erreicht. Der Drehzahlanstieg über den Stellweg Δs1 der Stellkurve S1 hat eine Steigung p1. Der Benutzer kann das Betätigungsglied 8 (Gashebel) über 70% bis 80% niederdrücken, bevor die erste Enddrehzahl n1 der ersten Betriebskurve K1 erreicht ist.

Entsprechend ist die Stellkurve S2 der zweiten Betriebskurve K2 ausgelegt. Die zweite Enddrehzahl n2 der zweiten Betriebskurve K2 ist größer als die Enddrehzahl n1 der ersten Betriebskurve K1. Der Drehzahlanstieg über den Stellabschnitt Δs2 der Stellkurve S2 hat eine Steigung p2. Der Benutzer kann das Betätigungsglied 8 (Gashebel) über bis zu 70% niederdrücken, bevor die zweite Enddrehzahl n2 der zweiten Betriebskurve K2 erreicht ist. Der Drehzahlanstieg ist steiler als bei der ersten Stellkurve S1 der ersten Betriebskurve K1.

Die Stellkurve S3 der dritten Betriebskurve K3 hat eine dritte Enddrehzahl n3, die größer ist als die Enddrehzahl n2 der zweiten Betriebskurve K2 und/oder der Enddrehzahl n1 der ersten Betriebskurve K2. Der Drehzahlanstieg über den Stellabschnitt Δs3 der Stellkurve S3 hat eine Steigung p3. Der Benutzer kann das Betätigungsglied 8 (Gashebel) um 30% niederdrücken und erreicht über diesen Stellabschnitt Δs3 bereits die dritte Enddrehzahl n3 der dritten Betriebskurve K3.

Mit der Wahl einer Betriebskurve K1, K2 oder K3 (Fig. 3) wird dieser jeweils eine ausgewählte Charakteristik des Stellgliedes 12 nach den Stellkurven S1, S2 und S3 (Fig. 4) zugeordnet. Der Betriebskurve K1 ist die Stellkurve S1 zugeordnet, sodass der Benutzer die Drehzahl feinfühlig variieren kann und aufgrund der Begrenzung auf die Leistung P1 und die reduzierte Enddrehzahl n1 einen sauberen Schnitt in ein Material einbringen kann. Der Betriebskurve K2 ist die Stellkurve S2 zugeordnet, mit der über einen etwa gleichen Stellabschnitt Δs2 wie in der Stellkurve S1 die Drehzahl ausgehend von einer Startdrehzahl auf die zweite Enddrehzahl n2 feinfühlig erhöhen kann. Wird eine maximale Leistung benötigt, wird die Betriebskurve K3 mit der Stellkurve S3 angewählt, bei der über einen Stellabschnitt von 30% bereits die Enddrehzahl n3 erreicht ist.

## Patentansprüche

1. Trennschleifer umfassend ein Trennwerkzeug (3) und einen elektrischen Antriebsmotor (AM) zum Antrieb des Trennwerkzeugs (3) um eine Drehachse (4), wobei der Trennschleifer (1) eine Steuereinheit (10) umfasst, die ausgebildet ist, dem elektrischen Antriebsmotor (AM) über zumindest ein Schaltelement (11) eine elektrische Leistung (P) für eine Drehzahl (n) zuzuführen, wobei die Steuereinheit (10) mit einem manuell verstellbaren Stellglied (12) verbunden ist, und das Stellglied (12) ausgebildet ist, der Steuereinheit (10) ein in seiner Größe und/oder Form veränderbares Stellsignal (13) zuzuführen, wobei das manuelle Stellglied (12) mit einem Stellweg (14) ausgebildet ist, der sich zwischen einer ersten Lage (A) des Stellgliedes (12) und einer zweiten Lage (B) des Stellgliedes (12) erstreckt, und sich die Größe und/oder Form des Stellsignals (13) von der ersten Lage (A) zur zweiten Lage (B) des Stellgliedes (12) in Abhängigkeit zumindest eines zurückgelegten Abschnittes des Stellweges (14) ändert, und sich die Drehzahl (n) des Antriebsmotors (AM) mit der Größe und/oder Form des Stellsignals (13) ändert,
**dadurch gekennzeichnet, dass** die Steuereinheit (10) über einen ersten und zumindest einen zweiten Betriebsmodus (M1, M2) verfügt, und die Steuereinheit (10) ausgebildet ist, im ersten Betriebsmodus (M1) in Abhängigkeit des Stellsignals (13) die Drehzahl (n) des Antriebsmotors (AM) nach einer ersten Betriebskurve (K1) mit einer ersten maximalen Leistung (P1) und einer ersten Enddrehzahl (n1) zu steuern, und die Steuereinheit (10) ausgebildet ist, im zweiten Betriebsmodus (M2) in Abhängigkeit der Größe des Stellsignals (13) die Drehzahl (n) des Antriebsmotors (AM) nach einer zweiten Betriebskurve (K2) mit einer zweiten maximalen Leistung (P2) und einer zweiten Enddrehzahl (n2) zu steuern.

2. Trennschleifer nach Anspruch 1,
**dadurch gekennzeichnet, dass** die erste und die zweite Betriebskurve (K1, K2) durch vorgegebene Kennwerte bestimmt sind, und die Kennwerte insbesondere in einem Betriebskurvenspeicher (15) abgespeichert sind, wobei der Betriebskurvenspeicher (15) mit der Steuereinheit (10) verbunden ist.

3. Trennschleifer nach Anspruch 1 oder 2,
**dadurch gekennzeichnet, dass** die erste und die zweite Betriebskurve (K1, K2) jeweils ein Leistungsplateau (21, 22) mit einer vorgegebenen, insbesondere gleichbleibenden Leistung (P1, P2) aufweisen.

4. Trennschleifer nach einem der Ansprüche 1 bis 3,
**dadurch gekennzeichnet, dass** die ansteigenden Kurvenabschnitte (K11, K12) zum jeweiligen Leistungsplateau (21, 22) der ersten und der zweiten Betriebskurve (K1, K2) unterschiedliche Steigungen (m1, m2) haben.

5. Trennschleifer nach Anspruch 4,
**dadurch gekennzeichnet, dass** die Steigung (m1) des Kurvenabschnittes (K11) zum Leistungsplateau (21) der ersten Betriebskurve (K1) kleiner ist als die Steigung (m2) des Kurvenabschnittes (K22) zum Leistungsplateau (22) der zweiten Betriebskurve (K2).

6. Trennschleifer nach einem der Ansprüche 1 bis 5,
**dadurch gekennzeichnet, dass** die erste Enddrehzahl (n1) der ersten Betriebskurve (K1) kleiner ist als die zweite Endrehzahl (n2) der zweiten Betriebskurve (K2) und/oder dass die erste maximale Leistung (P1) der ersten Betriebskurve (K1) kleiner als die zweite maximale Leistung (P2) der zweiten Betriebskurve (K2) ist, insbesondere so dass wenn vom Benutzer über eine Eingabeeinheit (16) der erste Betriebsmodus (M1) mit kleiner erster Enddrehzahl (n1) und einer kleinen ersten maximalen Leistung (P1) gewählt wird, auch bei einem vollständig durchgedrückten Betätigungsglied (8) zur Beeinflussung der Drehzahl und/oder der Leistung ein sauberer und präziser Schnitt ausgeführt werden kann.

7. Trennschleifer nach Anspruch 6,
**dadurch gekennzeichnet, dass** der Trennschleifer (1) ein Betätigungsglied (8) zur Betätigung des Stellglieds (12) umfasst, dass die erste maximale Leistung (P1) der ersten Betriebskurve (K1) kleiner als die zweite maximale Leistung (P2) der zweiten Betriebskurve (K2), so dass wenn vom Benutzer über eine Eingabeeinheit (16) der erste Betriebsmodus (M1) mit kleiner erster Enddrehzahl (n1) und einer kleinen ersten maximalen Leistung (P1) gewählt wird, auch bei vollständig durchgedrücktem Betätigungsglied (8) ein sauberer und präziser Schnitt ausgeführt werden kann.

8. Trennschleifer nach einem der Ansprüche 1 bis 7,
**dadurch gekennzeichnet, dass** in einen dritten Betriebsmodus (M3) eine dritte Betriebskurve (K3) vorgegeben ist, und die dritte Betriebskurve (K3) in einem mit der Steuereinheit (10) verbundenen Betriebskurvenspeicher (16) hinterlegt ist.

9. Trennschleifer nach Anspruch 8,
**dadurch gekennzeichnet, dass** die dritte Betriebskurve (K3) eine maximale Steigung (m3) und eine maximale Enddrehzahl (n3) aufweist.

10. Trennschleifer nach einem der Ansprüche 1 bis 9,
**dadurch gekennzeichnet, dass** das manuelle Stellglied (12) ein Potentiometer, insbesondere ein digitales Potentiometer ist.

11. Trennschleifer nach einem der Ansprüche 1 bis 10,
**dadurch gekennzeichnet, dass** die elektrische Leistung (P) von einem Akku (2) zur Verfügung gestellt ist, und insbesondere die Leistung und/oder die Kapazität des Akkus (2) von der Steuereinheit (10) erfasst ist, wobei ganz insbesondere die Auswahl des Betriebsmodus (M1, M2, M3) in Abhängigkeit der Größe der Leistung und/oder der Kapazität des Akkus (2) gewählt ist.

12. Trennschleifer nach einem der Ansprüche 1 bis 11,
**dadurch gekennzeichnet, dass** der Stellweg (14) des Stellgliedes (12) einen ersten Stellabschnitt (Δs1) und zumindest einen zweiten Stellabschnitt umfasst, und die Drehzahl (n) des Antriebsmotors (AM) im ersten Stellabschnitt (Δs1) auf die Enddrehzahl (n1) des Betriebsmodus (M1) zunimmt, wobei im ersten Betriebsmodus (M1) der erste Stellabschnitt (Δs1) länger ist als ein erste Stellabschnitt (Δs2) im zweiten Betriebsmodus (M2).

13. Trennschleifer nach Anspruch 12,
**dadurch gekennzeichnet, dass** der ersten Stellabschnitt (Δs1) im ersten Betriebsmodus (M1) 70% bis 80% des gesamten Stellweges (14) entspricht und der erste Stellabschnitt (Δs2) im zweiten Betriebsmodus (M2) 50% bis 70% des gesamten Stellweges (14) entspricht.

14. Trennschleifer nach Anspruch 12 oder 13,
**dadurch gekennzeichnet, dass** der ersten Stellabschnitt (Δs3) im dritten Betriebsmodus (M3) 25% bis 35% des gesamten Stellweges (14) entspricht.

15. Trennschleifer nach einem der Ansprüche 1 bis 14,
**dadurch gekennzeichnet, dass** der Trennschleifer (1) zur Führung und zum Halten durch einen Benutzer einen hinteren Handgriff (5) und einen vorderen Handgriff (6) aufweist, und dass im hinteren Handgriff (8) das Betätigungsglied (8) gehalten ist.
